# EUROPÄISCHE PATENTSCHRIFT

(11) **EP 3 749 965 B1**
(45) Veröffentlichungstag und Bekanntmachung des Hinweises auf die Patenterteilung: **18.09.2024**
(21) Anmeldenummer: 19702242.9
(22) Anmeldetag: 28.01.2019
(51) Int. Cl.: G01P 13/04, G01P 3/488, G01P 3/49, G01P 13/00

(54) **VERFAHREN UND VORRICHTUNG ZUM BESTIMMEN EINER GESCHWINDIGKEIT MIT HILFE EINES INDUKTIVEN GESCHWINDIGKEITSSENSORS**
METHOD AND DEVICE FOR DETERMINING A SPEED BY MEANS OF AN INDUCTIVE SPEED SENSOR
PROCÉDÉ ET DISPOSITIF POUR DÉTERMINER UNE VITESSE AU MOYEN D'UN CAPTEUR DE VITESSE INDUCTIF

(30) Priorität: 09.02.2018 DE 102018001053
(43) Veröffentlichungstag der Anmeldung: 16.12.2020
(73) Patentinhaber: KNORR-BREMSE Systeme für Nutzfahrzeuge GmbH, 80809 München (DE)
(72) Erfinder: KLUFTINGER, Andre, 63924 Kleinheubach (DE); HERGES, Michael, 80935 München (DE); HUBER, Christoph, 80333 München (DE); EISSNER, Markus, 92676 Eschenbach (DE)
(86) Internationale Anmeldenummer: PCT/EP2019/051967
(87) Internationale Veröffentlichungsnummer: WO 2019/154653

(56) Entgegenhaltungen:
- DE-A1- 102005 016 110
- DE-A1- 102007 003 013
- DE-A1- 102008 056 700
- DE-A1- 102012 224 098
- US-A1- 2003 176 932
- US-A1- 2005 083 041
- US-A1- 2015 057 878
- US-B1- 8 965 691

## Beschreibung

Die Erfindung betrifft ein Verfahren zum Bestimmen einer Geschwindigkeit und einer Umkehrung der Bewegungsrichtung zwischen einem wenigstens eine Spule umfassenden Messaufnehmer und einem die Induktivität der wenigstens einen Spule verändernden ferromagnetischen Geberelement in einem Fahrzeug, gemäß dem Oberbegriff von Anspruch 1.

Weiterhin betrifft die Erfindung eine Geschwindigkeitsmessvorrichtung zum Bestimmen einer Geschwindigkeit und einer Umkehrung der Bewegungsrichtung zwischen einem wenigstens eine Spule umfassenden Messaufnehmer und einem die Induktivität der wenigstens einen Spule verändernden ferromagnetischen Geberelement in einem Fahrzeug, gemäß dem Oberbegriff von Anspruch 5.

Weiterhin betrifft die Erfindung auch ein Fahrerassistenzsystem mit einer solchen Geschwindigkeitsmessvorrichtung gemäß Anspruch 12 sowie auch ein Fahrzeug mit einem solchen Fahrerassistenzsystem gemäß Anspruch 14.

Aus DE 101 46 949 A1 ein aktiver Geschwindigkeitssensor als Raddrehzahlsensor bekannt, in dem sich vor einem magnetoresistiven Element als Messaufnehmer ein ferro- oder dauermagnetischer Encoder als Geberelement dreht. Der Messaufnehmer ist als Brücke in einer Brückenschaltung verschaltet, wobei die am Messaufnehmer abfallende Brückenspannung durch den sich drehenden Encoder moduliert und von einer Auswerteschaltung ausgewertet wird. Ein derartiges magnetoresistives Elemente kann beispielsweise durch ein Hall-Element gebildet werden. Bei magnetoresistiven Geschwindigkeitssensoren mit magnetoresistiven Messaufnehmern hängt die Amplitude des Signals des Messaufnehmers nicht von der Drehzahl ab. Daher können magnetoresistive Geschwindigkeitssensoren eine Geschwindigkeit vom Stillstand bis zu einer maximalen Geschwindigkeit erfassen.

Gemäß der gattungsbildenden WO 2014/095311 A1 kommt für magnetoresistive Geschwindigkeitssensoren im Automobilbereich derzeit aus Kostengründen ausschließlich Silizium in Frage, wodurch die Arbeitstemperatur der magnetoresistiven Geschwindigkeitssensoren nach oben begrenzt werde, je nach Technologie auf 150 °C bis 200 °C. In Kraftfahrzeugen gibt es jedoch an einigen Einsatzorten für Geschwindigkeitssensoren höhere Spitzentemperaturen, die bislang nur durch induktive Geschwindigkeitssensoren abgedeckt werden können. Weiterhin gebe es einen Nachteil der halbleiterbasierten, magnetoresistiven Geschwindigkeitssensoren, der nicht prinzipbedingt sei, sondern durch die Art der Industrialisierung der Lösung verursacht werde. Da die Signalverarbeitungsschaltungen, die in Form von ASICs ausgebildet sein könnten, sehr billig sein müssten, was nur durch Massenproduktion möglich sei, könne keine Anpassung an die jeweilige Applikation in einem Fahrzeug vorgenommen werden. Alle Geschwindigkeitssensoren eines Typs arbeiteten mit der gleichen Obergrenze der Frequenz, ab der das Messsignal aus dem Messaufnehmer durch die Tiefpassfilterung abgeschwächt werde. Für bestimmte Anwendungen liege die Grenze, die durch den Massenmarkt gesetzt wird, jedoch teilweise zu niedrig.

DE 41 30 168 A1 offenbart einen passiven induktiven Geschwindigkeitssensor als Motordrehzahlsensor, in dem sich vor einer als Messaufnehmer ausgebildeten Spule mit ganz oder teilweise permanent-magnetischem Kern als Joch ein als Geberelement ausgebildeter ferromagnetischer Encoder dreht. Die Anordnung wirkt als Generator. In der Spule wird eine Generatorspannung induziert, deren Frequenz und Amplitude proportional zur Drehzahl sind. Bei induktiven Geschwindigkeitssensoren sind die Generatorspannung und deren Frequenz proportional zur erfassten Geschwindigkeit. Dies führt dazu, dass im Stillstand keine Generatorspannung gemessen werden kann. Daher existiert bei induktiven Geschwindigkeitssensoren eine untere Grenzgeschwindigkeit, bei der die induzierte Spannung noch gerade hoch genug ist, um eine Auswertung zu ermöglichen, die hinsichtlich Zuverlässigkeit und Genauigkeit der zu erfassenden Geschwindigkeit den Anforderungen genügt. Wenn bei Fahrzeugen die Radgeschwindigkeiten durch induktive Geschwindigkeitssensoren gemessen werden sollen, ist die Existenz einer solchen Untergrenze für die zu erfassende Geschwindigkeit allerdings nachteilig, weil in einem Fahrzeug üblicherweise vorhandene Regelsysteme wie Fahrerassistenzsysteme die Signale der als Raddrehzahlsensoren ausgebildeten Geschwindigkeitssensoren benötigen. Viele der zuvor genannten Funktionen werden bei jeder zu erfassenden Geschwindigkeit benötigt, andere sind besonders bei sehr niedrigen zu erfassenden Geschwindigkeiten bis hin zum Stillstand von Bedeutung. Beispiele sind die Berganfahrhilfe (HSA, "Hill Start Assist"), Autohold-Funktion und Antriebsschlupfregelung (ASR). Die induktiven Geschwindigkeitssensoren haben jedoch den Vorteil, dass ihre Herstellungskosten im Vergleich zu aus Halbleitern hergestellten magnetoresistiven Geschwindigkeitssensoren geringer sind. Zum anderen sind sie besonders robust. Das gilt für die mechanische Beanspruchung, für externe elektromagnetische Felder und für den zulässigen Temperaturbereich.

In der WO 2014/095311 A1 wird daher eine Induktivität einer Spule als Messaufnehmer in einem Geschwindigkeitssensor verwendet. Anders als in einem induktiven Geschwindigkeitssensor wird jedoch die als Messaufnehmer verwendete Induktivität nicht als Generator betrieben. Vielmehr wird die als Messaufnehmer verwendete Induktivität wie in einem magnetoresistiven Geschwindigkeitssensor hinsichtlich ihrer sich verändernden elektrischen Impedanz betrachtet. Genauer umfasst das dort das angegebene Verfahren die Schritte: Anlegen einer Quellenspannung an die Induktivität, und Erfassen einer Änderung einer basierend auf der Quell- Spannung an der Induktivität abfallenden Messspannung, um die Änderung der Induktivität zu erfassen. Dabei moduliert der an der Induktivität mit der zu messenden Geschwindigkeit vorbeiziehende Encoder die Quellspannung in Abhängigkeit dieser Geschwindigkeit. Auf diese Weise wird eine veränderliche Messspannung als Messsignal erfasst, aus der die zu messende Geschwindigkeit hervorgeht. Als Quellspannung wird dabei eine Wechselspannung herangezogen. Die Geschwindigkeit des Encoders soll damit keinen Einfluss auf die Amplitude des Messergebnisses haben, so dass das angegebene Verfahren geschwindigkeitsunabhängig zur Messung der Geschwindigkeit eingesetzt werden könnte. Jedoch muss hierzu eine Spannungsquelle für die Quellspannung vorgesehen und angeschlossen werden.

Die gattungsbildende DE 10 2012 224 098 A1 offenbart ein Verfahren zum Erfassen einer Geschwindigkeit in einem Fahrzeug mittels eines aktiven Geschwindigkeitssensors, der von einer Quellspannung versorgt wird. US 2015/057878 A1 und US 8 965 691 B1 offenbaren jeweils eine Auswertung eines Phasenversatzes zwischen den Signalen von zwei aktiven Geschwindigkeitssensoren, welche unterschiedlichen Rädern zugeordnet sind, um eine Umkehr der Bewegungsrichtung festzustellen. Auch hier muss jeweils eine Spannungsquelle für eine Quellspannung vorgesehen und angeschlossen werden. DE 10 2005 016 110 A1 beschreibt ein Verfahren und eine Vorrichtung zum Ermitteln einer Rollrichtung eines Fahrzeugs, wobei phasenverschobene Drehzahlsignale von wenigstens an drei unterschiedlichen Rädern angeordneten Drehzahlsensoren ausgewertet werden. DE10 2007 003 013 A1 offenbart ein Verfahren und eine Vorrichtung zur Fahrtrichtungserkennung eines Kraftfahrzeugs. US 2003/176932A1 beschreibt ein Verfahren und eine Vorrichtung zum Messen einer Charakteristik einer Maschine mit Hilfe eines variablen Reluktanz-Sensors. US 2005/083041 A1 beschreibt ein System für ein autonomes Fahrzeug das die Signale von als Geschwindigkeitssensoren dienenden 1-Kanal-Encodern an verschiedenen Rädern des Fahrzeugs nutzt. DE 10 2008 056 700 A1 beschreibt einen induktiven Sensor, der einen niedrigeren und einen höheren Drehzahlbereich misst.

Der vorliegenden Erfindung liegt die Aufgabe zugrunde, ein Verfahren und eine Geschwindigkeitsmessvorrichtung zur Verfügung zu stellen, mit welchen die Geschwindigkeit und eine Umkehrung der Bewegungsrichtung mit geringem Aufwand erkennbar ist. Ebenso sollen auch ein Fahrerassistenzsystem mit wenigstens einer solchen Geschwindigkeitsmessvorrichtung sowie ein Fahrzeug mit einem solchen Fahrerassistenzsystem zur Verfügung gestellt werden.

Gemäß der Erfindung wird diese Aufgabe durch die Merkmale der Ansprüche 1, 5, 12 und 14 gelöst.

### Offenbarung der Erfindung

Die Erfindung basiert auf der Überlegung, für das Verfahren und die Geschwindigkeitsmessvorrichtung ausschließlich passive induktive Geschwindigkeitssensoren wegen der oben beschriebenen Vorteile hinsichtlich Herstellkosten und Robustheit heranzuziehen.

Die Erfindung basiert dann gemäß einem Aspekt auf einem Verfahren gemäß Anspruch 1 zum Bestimmen einer Geschwindigkeit und einer Umkehrung der Bewegungsrichtung zwischen einem wenigstens eine Spule umfassenden Messaufnehmer und einem die Induktivität L der wenigstens einen Spule verändernden ferromagnetischen Geberelement mit Hilfe eines wenigstens die Spule und das ferromagnetische Geberelement aufweisenden induktiven Geschwindigkeitssensors, bei welchem eine Änderung der Induktivität L der wenigstens einen Spule erfasst und die Geschwindigkeit basierend auf der geänderten Induktivität L der wenigstens einen Spule bestimmt wird, wobei für wenigstens zwei Räder des Fahrzeugs jeweils ein induktiver Geschwindigkeitssensor als Raddrehzahlsensor vorgesehen wird.

Insbesondere ist dreht das (ringförmige) Geberelement zusammen mit dem Rad gegenüber dem stationären Messaufnehmer aus der wenigstens einen Spule, dem Kern und einem Permanentmagneten.

Wie in WO 2014/095311 A1 beschrieben, wird bei dem Verfahren daher eine Änderung der durch den Raddrehzahlsensor erfassten Induktivitäten L erfasst und die Geschwindigkeit basierend auf der geänderten Induktivität L bestimmt.

Erfindungsgemäß wird eine Umkehrung der Drehbewegungsrichtung des ferromagnetischen Geberelements gegenüber der wenigstens einen Spule oder eine Umkehrung der Fahrtrichtung des Fahrzeugs von Vorwärtsfahrt auf Rückwärtsfahrt oder von Rückwärtsfahrt auf Vorwärtsfahrt auf der Basis wenigstens eines zeitlichen Phasenversatzes der zeitlichen Verläufe der von Raddrehzahlsensoren von wenigstens zwei unterschiedlichen Rädern des Fahrzeugs erfassten Induktivitäten erkannt.

Die Anmelderin nutzt dabei den Effekt, dass bei an mehreren Rädern angeordneten Raddrehzahlsensoren davon auszugehen ist, dass deren periodische Induktivitätssignale aufgrund einer in Umfangsrichtung gesehen zufälligen Montage der Geberelemente (Encoder) und damit der Zahn/Zahnlückenpositionen an den Rädern stets von phasenverschobenen zeitlichen Verläufen der von Raddrehzahlsensoren an verschiedenen Rädern erfassten Induktivitäten L auszugehen ist. Die Anmelderin hat außerdem herausgefunden, dass sich der Phasenversatz der von den Raddrehzahlsensoren der wenigstens zwei Räder erfassten zeitlichen Verläufe der Induktivitäten L signifikant ändert, wenn sich die Dreh- oder Bewegungsrichtung der Räder umkehrt. Denn beispielsweise bei zwei mit jeweils einem Raddrehzahlsensor versehenen Rädern läuft bei einer Fahrt in einer Richtung der Verlauf der von dem einen Raddrehzahlsensor des einen Rades erfassten Induktivität L beispielsweise dem Verlauf der von dem anderen Raddrehzahlsensor des anderen Rades erfassten Induktivität L zeitlich vor oder zeitlich nach. Wie die Anmelderin erkannt hat, kehrt sich dieser zeitliche Vorlauf bzw. dieser zeitliche Nachlauf jedoch nach einem Zwischenstopp oder Fahrzeugstillstand in einen zeitlichen Nachlauf bzw. zeitlichen Vorlauf um, wenn die Fahrtrichtung nach einem Zwischenstopp oder Fahrzeugstillstand in die Gegenrichtung geändert wurde, was als signifikante Änderung der zeitlichen Phasenversätze zwischen den zeitlichen Verläufen der von den Raddrehzahlsensoren erfassten Induktivitäten L angesehen wird, weil sich der Phasenversatz gerade umkehrt.

Das Schließen auf eine Umkehrung der (Dreh-)Bewegungsrichtung des Geberelements gegenüber dem Messaufnehmer bzw. der Spule bzw. der Fahrtrichtung kann den Verfahrensschritt einer Erzeugung eines entsprechenden Signals beinhalten, welches dann zur Weiterverarbeitung beispielsweise einem Fahrerassistenzsystem zur Verfügung gestellt wird.

Insbesondere kann bei dem Verfahren
a) ausgehend von einer erfassten Fahrt des Fahrzeugs wenigstens ein erster zeitlicher Phasenversatz zwischen ersten zeitlichen Verläufen der von den Raddrehzahlsensoren der wenigstens zwei Räder erfassten Induktivitäten bis zu einem erfassten Stillstand des Fahrzeugs gespeichert werden, und dann
b) nach einem erfassten Wiederanfahren des Fahrzeugs wenigstens ein zweiter zeitlicher Phasenversatz zwischen zweiten zeitlichen Verläufen der von den Raddrehzahlsensoren der wenigstens zwei Räder erfassten Induktivitäten L erfasst und mit dem wenigstens einen ersten zeitlichen Phasenversatz verglichen werden, und wenn dabei festgestellt wird, dass
c) der wenigstens eine zweite zeitliche Phasenversatz von dem wenigstens einen ersten zeitlichen Phasenversatz eine signifikante Abweichung aufweist, auf eine Umkehrung der Fahrtrichtung von Vorwärtsfahrt auf Rückwärtsfahrt oder von Rückwärtsfahrt auf Vorwärtsfahrt geschlossen werden, und falls aber
d) andernfalls festgestellt wird, dass eine lediglich nicht signifikante Abweichung des wenigstens einen zweiten zeitlichen Phasenversatzes von dem wenigstens einen ersten zeitlichen Phasenversatz vorliegt, auf eine Beibehaltung der Fahrtrichtung Vorwärtsfahrt oder Rückwärtsfahrt geschlossen werden.

Ein Erfassen der Fahrt bzw. der Wiederanfahrt des Fahrzeugs kann durch eine zeitliche Änderung der Induktivität L auf einfache Weise ermittelt werden.

Bei dem Verfahren kann insbesondere als eine signifikante Abweichung des wenigstens einen zweiten zeitlichen Phasenversatzes von dem wenigstens einen ersten zeitlichen Phasenversatz interpretiert werden, wenn der wenigstens eine zweite zeitliche Phasenversatz gegenüber dem wenigstens einen ersten zeitlichen Phasenversatz invertiert ist, wobei sich ein zeitlicher Vorlauf des ersten Verlaufs der von dem Raddrehzahlsensor eines ersten Rads der wenigstens zwei Räder erfassten Induktivität gegenüber dem ersten Verlauf der von dem Raddrehzahlsensor eines zweiten Rads der wenigstens zwei Räder erfassten Induktivität um den ersten zeitlichen Phasenversatz in einen zeitlichen Nachlauf des zweiten Verlaufs der von dem Raddrehzahlsensor des ersten Rads der wenigstens zwei Räder erfassten Induktivität gegenüber dem zweiten Verlauf der von dem Raddrehzahlsensor des zweiten Rads der wenigstens zwei Räder erfassten Induktivität L um den zweiten zeitlichen Phasenversatz ändert. Während daher der erste zeitliche Verlauf der von dem Raddrehzahlsensor des ersten Rades erfassten Induktivität L dem ersten zeitlichen Verlauf der von dem Raddrehzahlsensor des zweiten Rades erfassten Induktivität L zeitlich vorgelaufen ist, kehren sich nach dem Zwischenstopp oder Fahrzeugstillstand die Verhältnisse um, indem dann der zweite zeitliche Verlauf der von dem Raddrehzahlsensor des ersten Rades erfassten Induktivität L dem zweiten zeitlichen Verlauf der von dem Raddrehzahlsensor des zweiten Rades erfassten Induktivität L zeitlich nachläuft. Dieser Wechsel von zeitlichem Vorlauf während der ersten zeitlichen Verläufe der Induktivität L, also zeitlich vor dem Fahrzeugstillstand oder Zwischenstopp in einen zeitlichen Nachlauf während der zweiten zeitlichen Verläufe der Induktivität L stellt daher ein Indiz für eine signifikante Abweichung des wenigstens einen zweiten zeitlichen Phasenversatzes von dem wenigstens einen ersten zeitlichen Phasenversatz dar.

Auch wird bei dem erfindungsgemäßen Verfahren ein Stillstand des Fahrzeugs dadurch erfasst, dass in dem zeitlichen Verlauf der Induktivität L ein Abschnitt identifiziert wird, in welchem sich die Induktivität L nicht ändert und/oder in welchem der Gradient des zeitlichen Verlaufs der Induktivität L im Wesentlichen gleich Null ist.

Auch wird bei dem erfindungsgemäßen Verfahren als induktiver Geschwindigkeitssensor ein passiver induktiver als Raddrehzahlsensor vorgesehener Geschwindigkeitssensor herangezogen, wobei das Erfassen der Induktivität L der wenigstens einen Spule dadurch erfolgt, dass
a) die wenigstens eine Spule in einen Parallel- oder Seriell-Schwingkreis verschaltet und die Induktivität der wenigstens einen Spule abhängig von der Resonanzfrequenz des Schwingkreises erfasst wird, oder dass
b) die wenigstens eine Spule mit einem elektrischen Impuls beaufschlagt wird und die Induktivität der wenigstens einen Spule abhängig von Antwort der wenigstens einen Spule auf den elektrischen Impuls erfasst wird, oder dass
c) die wenigstens eine Spule mit einer konstanten Frequenz beaufschlagt und dann die Induktivität der wenigstens einen Spule erfasst wird.

Gemäß einem weiteren Aspekt der Erfindung wird eine Geschwindigkeitsmessvorrichtung gemäß Anspruch 5 zum Bestimmen einer Geschwindigkeit und einer Umkehrung der Bewegungsrichtung zwischen einem wenigstens eine Spule umfassenden Messaufnehmer und einem die Induktivität L der wenigstens einen Spule verändernden ferromagnetischen Geberelement in einem Fahrzeug vorgeschlagen, welche wenigstens einen induktiven Geschwindigkeitssensor aufweist, der mindestens Folgendes umfasst:
a) die wenigstens eine Spule,
b) das ferromagnetische Geberelement,
c) eine (elektronische) Auswerteschaltung, wobei
d) die (elektronische) Auswerteschaltung ausgebildet ist, dass sie eine Änderung der Induktivität L der wenigstens einen Spule erfasst und die Geschwindigkeit basierend auf der geänderten Induktivität L der wenigstens einen Spule bestimmt, wobei
e) für wenigstens zwei Räder des Fahrzeugs jeweils ein induktiver Geschwindigkeitssensor als Raddrehzahlsensor vorgesehen ist, wobei
f) die Auswerteschaltung weiterhin ausgebildet ist, dass sie eine Umkehrung der Drehbewegungsrichtung des ferromagnetischen Geberelements gegenüber der wenigstens einen Spule oder eine Umkehrung der Fahrtrichtung des Fahrzeugs von Vorwärtsfahrt auf Rückwärtsfahrt oder von Rückwärtsfahrt auf Vorwärtsfahrt auf der Basis wenigstens eines zeitlichen Phasenversatzes zwischen den zeitlichen Verläufen der mittels der Raddrehzahlsensoren der wenigstens zwei Räder erfassten Induktivitäten erkennt, und dass
g) die Auswerteschaltung ausgebildet ist, dass sie einen Stillstand des Fahrzeugs dadurch erfasst, dass sie in dem zeitlichen Verlauf der Induktivität L einen Abschnitt identifiziert, in welchem sich die Induktivität L nicht ändert und/oder in welchem der Gradient des Verlaufs der Induktivität L im Wesentlichen gleich Null ist, wobei der induktive Geschwindigkeitssensor ein passiver induktiver Geschwindigkeitssensor ist, wobei
h) die wenigstens eine Spule in einen Parallel- oder Seriell-Schwingkreis verschaltet ist und die Auswerteschaltung ausgebildet ist, dass sie die Induktivität L der wenigstens einen Spule abhängig von der Resonanzfrequenz des Schwingkreises erfasst, oder dass
i) Mittel zum Beaufschlagen der wenigstens einen Spule mit einem elektrischen Impuls vorgesehen sind, welche die wenigstens eine Spule mit einem elektrischen Impuls beaufschlagen, wobei die Auswerteschaltung ausgebildet ist, dass sie die Induktivität L der wenigstens einen Spule abhängig von der Antwort der wenigstens einen Spule auf den elektrischen Impuls erfasst, oder dass
j) Mittel zum Beaufschlagen der wenigstens einen Spule mit einer konstanten Frequenz vorgesehen sind, welche die wenigstens eine Spule mit einer konstanten Frequenz beaufschlagen und die Auswerteschaltung ausgebildet ist, dass sie dann die Induktivität L der wenigstens einen Spule erfasst.

Insbesondere kann dann die Auswerteschaltung ausgebildet sein, dass sie
a) ausgehend von einer erfassten Fahrt des Fahrzeugs wenigstens einen ersten zeitlichen Phasenversatz zwischen ersten zeitlichen Verläufen der von den Raddrehzahlsensoren der wenigstens zwei Räder erfassten Induktivitäten L bis zu einem erfassten Stillstand des Fahrzeugs speichert, und dann
b) nach einem erfassten Wiederanfahren des Fahrzeugs wenigstens einen zweiten zeitlichen Phasenversatz zwischen zweiten zeitlichen Verläufen der von den Raddrehzahlsensoren der wenigstens zwei Räder erfassten Induktivitäten L erfasst und mit dem wenigstens einen ersten zeitlichen Phasenversatz vergleicht, und wenn sie dabei feststellt, dass
c) der wenigstens eine zweite zeitliche Phasenversatz von dem wenigstens einen ersten zeitlichen Phasenversatz eine signifikante Abweichung aufweist, auf eine Umkehrung der Fahrtrichtung von Vorwärtsfahrt auf Rückwärtsfahrt oder von Rückwärtsfahrt auf Vorwärtsfahrt schließt, und falls sie aber
d) andernfalls feststellt, dass eine lediglich nicht signifikante Abweichung des wenigstens einen zweiten zeitlichen Phasenversatzes von dem wenigstens einen ersten zeitlichen Phasenversatz vorliegt, auf eine Beibehaltung der Fahrtrichtung Vorwärtsfahrt oder Rückwärtsfahrt schließt.

Das Schließen auf eine Umkehrung der Fahrtrichtung von Vorwärtsfahrt auf Rückwärtsfahrt oder von Rückwärtsfahrt auf Vorwärtsfahrt bzw. das Schließen auf eine Beibehaltung der Fahrtrichtung Vorwärtsfahrt oder Rückwärtsfahrt kann eine Erzeugung eines entsprechenden Signals durch die elektronische Auswerteschaltung beinhalten, welches dann zur Weiterverarbeitung beispielsweise einem Fahrerassistenzsystem zur Verfügung gestellt wird.

Ein Erfassen der Fahrt bzw. der Wiederanfahrt des Fahrzeugs kann von der elektronischen Auswerteschaltung aufgrund einer dann stattfindenden zeitlichen Änderung der Induktivität L ermittelt werden.

Bei der Geschwindigkeitsmessvorrichtung ist die Auswerteschaltung erfindungsgemäß auch ausgebildet, dass sie einen Stillstand des Fahrzeugs dadurch erfasst, dass sie in dem zeitlichen Verlauf der Induktivität L einen Abschnitt identifiziert, in welchem der Gradient des Verlaufs der Induktivität L im Wesentlichen gleich Null ist.

Weiterhin kann bei der Geschwindigkeitsmessvorrichtung die Auswerteschaltung ausgebildet sein, dass sie als eine signifikante Abweichung zwischen dem wenigstens einen zweiten zeitlichen Phasenversatz von dem wenigstens einen ersten zeitlichen Phasenversatz interpretiert, wenn sie feststellt, dass der wenigstens eine zweite zeitliche Phasenversatz gegenüber dem wenigstens einen ersten zeitlichen Phasenversatz invertiert ist. Eine solche Inversion bedeutet beispielsweise, dass, wenn bei der Fahrt des Fahrzeugs ein Maximum oder ein Minimum des zeitlichen Verlaufs der Induktivität L eines ersten Raddrehzahlsensors einem Maximum oder einem Minimum des zeitlichen Verlaufs der Induktivität L eines zweiten Raddrehzahlsensors zeitlich vorgelaufen ist, dieser Vorlauf sich bei der Wiederanfahrt des Fahrzeugs in einen Nachlauf umkehrt, d.h. dass das Maximum oder das Minimum des zeitlichen Verlaufs der Induktivität L des ersten Raddrehzahlsensors dem Maximum oder dem Minimum des zeitlichen Verlaufs der Induktivität L des zweiten Raddrehzahlsensors nun zeitlich nachläuft. Zur Erläuterung dieses Effekts wird auf die obigen Ausführungen zum ersten Aspekt verwiesen.

Beispielsweise ist das ferromagnetische Geberelement ringförmig ausgebildet und dreht sich zusammen mit einem Rad des Fahrzeugs koaxial in Bezug auf die Radachse, während die wenigstens eine stationäre Spule einen weichmagnetischen Kern umgibt und eine gemeinsame Mittelachse der wenigstens einen Spule und des weichmagnetischen Kerns parallel zur Radachse und senkrecht zu einer Ebene angeordnet ist, welche auch senkrecht zur Radachse ist.

Insbesondere kann bei der Geschwindigkeitsmessvorrichtung das ferromagnetische Geberelement abwechselnd vorspringende Zähne und Zahnlücken aufweisen. In diesem Fall weist ein zeitlicher Verlauf der Induktivität L der wenigstens einen Spule ein Maximum auf, wenn ein Zahn dem weichmagnetischen Kern gegenüberliegt und ein Minimum, wenn eine Zahnlücke dem weichmagnetischen Kern gegenüberliegt. Daher ergibt sich ständig ein Wechsel zwischen einer minimalen Induktivität Lmin und einer maximalen Induktivität Lmax, wenn sich das Rad zusammen mit dem Geberelement gegenüber der Spule mit dem weichmagnetischen Kern dreht. Abschnitte in dem zeitlichen Verlauf der Induktivität, in denen sich die Induktivität nicht ändert oder in welchen der Gradient gleich Null ist, markieren dann einen Stillstand des Rades bzw. des Geberelements.

Auch kann bei der Geschwindigkeitsmessvorrichtung der weichmagnetische Kern an einem vom ferromagnetischen Geberelement wegweisenden Ende einen Permanentmagneten aufweisen.

Die Erfindung betrifft auch ein Fahrerassistenzsystem gemäß Anspruch 12 mit wenigstens einer oben beschriebenen Geschwindigkeitsmessvorrichtung. Bei einem solchen Fahrerassistenzsystem kann insbesondere eine zuverlässige Erfassung der Geschwindigkeit Null bzw. des Fahrzeugstillstands bedeutsam sein wie dies beispielsweise bei einem Fahrerassistenzsystem der Fall ist, welches eine Autohold-Funktion und/oder eine Berganfahrhilfe-Funktion beinhaltet.

Ebenso beinhaltet die Erfindung ein Fahrzeug gemäß Anspruch 14 mit einem solchen Fahrerassistenzsystem Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: schematische Darstellung einer Raddrehzahlmessvorrichtung als bevorzugte Ausführungsform einer Geschwindigkeitsmessvorrichtung der Erfindung;
- Fig.2: ein Diagramm, welches den zeitlichen Verlauf der durch die Raddrehzahlmessvorrichtung nach Fig.1 erfassten Induktivität L über der Zeit t darstellt;
- Fig.3: ein Diagramm, welches den zeitlichen Verlauf der durch Raddrehzahlmessvorrichtungen an vier Rädern eines Fahrzeugs erfassten Induktivitäten L über der Zeit t bei einer Fahrt in einer einzigen Fahrtrichtung mit Zwischenstopp darstellt;
- Fig.4: ein Diagramm, welches den zeitlichen Verlauf der durch Raddrehzahlmessvorrichtungen an vier Rädern eines Fahrzeugs erfassten Induktivitäten L über der Zeit t bei einer Fahrt in einer Fahrtrichtung und einem Zwischenstopp zeitlich nachfolgend in der Gegenfahrtrichtung darstellt.

### Beschreibung des Ausführungsbeispiels

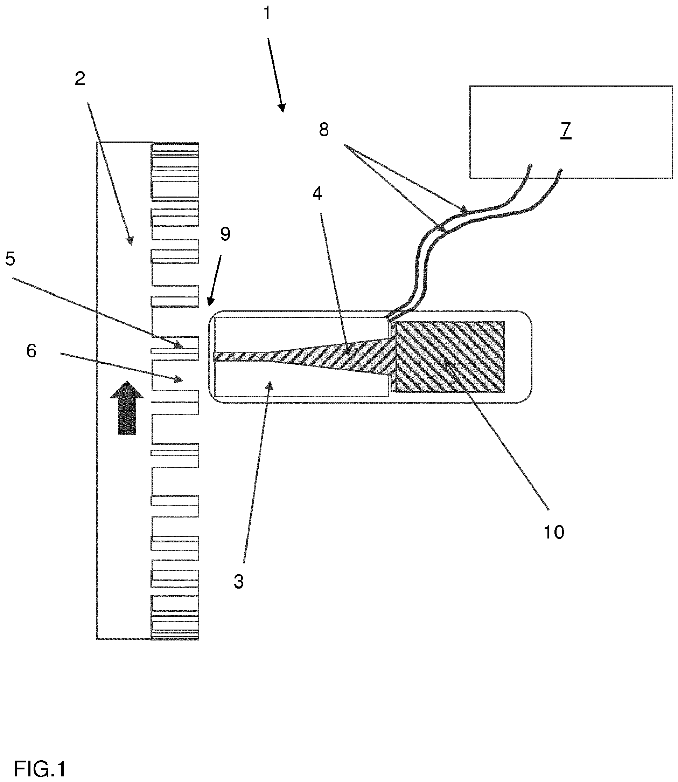

**Fig.1** ist ein eine schematische Darstellung eines Raddrehzahlsensors 1 als bevorzugte Ausführungsform einer Geschwindigkeitsmessvorrichtung der Erfindung. Der Raddrehzahlsensor 1 ist als passiver induktiver Geschwindigkeitssensor ausgebildet und umfasst ein ferromagnetisches Geberelement (Encoder) 2, welches beispielsweise ringförmig ausgebildet ist und sich zusammen mit einem Rad des Fahrzeugs koaxial in Bezug auf die Radachse dreht. Weiterhin umfasst der Raddrehzahlsensor 1 eine stationäre Spule 3 und einen weichmagnetischen Kern 4, wobei die Spule 3 den weichmagnetischen Kern 4 umgibt und eine gemeinsame Mittelachse der Spule 3 und des weichmagnetischen Kerns 4 parallel zur Radachse und senkrecht zu einer Ebene angeordnet ist, welche auch senkrecht zur Radachse ist.

Das ferromagnetische Geberelement 2 weist abwechselnd vorspringende Zähne 5 und Zahnlücken 6 auf. Umfasst von dem Raddrehzahlsensor 1 ist auch eine elektronische Auswerteschaltung 7, welche durch Leitungen 8 mit der Spule 3 verbunden ist. Zwischen dem ferromagnetischen Geberelement 2 und einem zu diesem weisenden Ende des weichmagnetischen Kerns 4 ist ein lichter Spalt 9 ausgebildet. An dem vom ferromagnetischen Geberelement 2 weg weisenden Ende des weichmagnetischen Kerns 4 ist ein Permanentmagnet 10 angeordnet. Das Magnetfeld des Permanentmagneten 10 durchsetzt einerseits den weichmagnetischen Kern 4, die Spule 3 wie auch das ferromagnetische Geberelement 2 wenigstens stellenweise.

Wenn sich das ferromagnetische Geberelement 2 gegenüber der stationären Einheit aus Spule 3 und weichmagnetischem Kern 4 dreht, also wenn sich das mit dem Raddrehzahlsensor 1 versehene Rad des Fahrzeugs dreht, dann ändert sich zum einen die Induktivität L der Spule 3 und eine in der Spule 3 induzierte Spannung U infolge der im Bereich des Spalts 9 abwechselnd ein- und ausfahrenden Zähne 5 und Zahnlücken 6.

Zum einen wird aufgrund des Induktionsgesetzes in der Spule 3 und daher auch in den Leitungen 8 eine Spannung U induziert, die der zeitlichen Änderung des magnetischen Flusses Φ proportional ist. Abhängig von der induzierten Spannung U kann dann in der elektronischen Auswerteschaltung 7 dann die (Dreh-) Geschwindigkeit des ferromagnetischen Geberelements 2 und damit des Rades bestimmt werden. Dabei hängt der magnetische Fluss Φ davon ab, ob dem Ende des weichmagnetischen Kerns 4, welches dem ferromagnetischen Geberelement 2 zugewandt ist, ein Zahn 5 oder eine Zahnlücke 6 gegenübersteht. Ein Zahn 5 bündelt den Streufluss des Permanentmagneten 10, ein Zahnlücke 6 dagegen schwächt den Magnetfluss. Wenn sich daher das Rad des Fahrzeugs zusammen mit dem ferromagnetischen Geberelement 2 dreht, so wird durch jeden Zahn 5 eine Magnetfeldänderung bewirkt. Diese Änderung des Magnetfelds erzeugt in der Spule 3 die Induktionsspannung U. Die Anzahl der Impulse pro Zeiteinheit sind dann ein Maß für die Raddrehzahl des Rades.

Zum einen ist daher die elektronische Auswerteschaltung 7 ausgebildet, dass sie eine Änderung der in der Spule 3 induzierten Spannung U erfasst und die (Dreh-) Geschwindigkeit des Rades basierend auf der geänderten, in der Spule 3 induzierten Spannung U bestimmt.

Andererseits wird bei einer Drehung des Rades und damit des ferromagnetischen Geberelements 2 die Induktivität L der Spule 3 in einer periodischen Weise verändert.

Abhängig davon, ob ein Zahn 5 oder eine Zahnlücke 6 dem weichmagnetischen Kern 4 gegenüberliegt ändert sich die Induktivität L der Spule 3.

Die elektronische Auswerteschaltung 7 ist daher zum andern ausgebildet ist, dass sie auch eine Änderung der Induktivität L der Spule 3 erfasst und die (Dreh-) Geschwindigkeit des Rades basierend auf der geänderten Induktivität L der Spule 3 bestimmt.

Dabei sind verschiedene Erfassungsverfahren denkbar. Beispielsweise kann die Spule 3 in einen Parallel- oder Seriell-Schwingkreis verschaltet und die Auswerteschaltung ausgebildet sein, dass sie die Induktivität L der Spule 3 abhängig von der Resonanzfrequenz des Schwingkreises erfasst. Alternativ können Mittel zum Beaufschlagen der Spule 3 mit einem elektrischen Impuls vorgesehen sein, welche die Spule 3 mit einem elektrischen Impuls beaufschlagen, wobei die Auswerteschaltung 7 dann beispielsweise ausgebildet ist, dass sie die Induktivität L der Spule 3 abhängig von der Antwort der Spule 3 auf den elektrischen Impuls erfasst. Nicht zuletzt können auch Mittel zum Beaufschlagen der Spule 3 mit einer konstanten Frequenz vorgesehen sein, welche die Spule 3 mit einer konstanten Frequenz beaufschlagen, wobei dann die Auswerteschaltung 7 ausgebildet ist, dass sie die Induktivität L der Spule 3 erfasst.

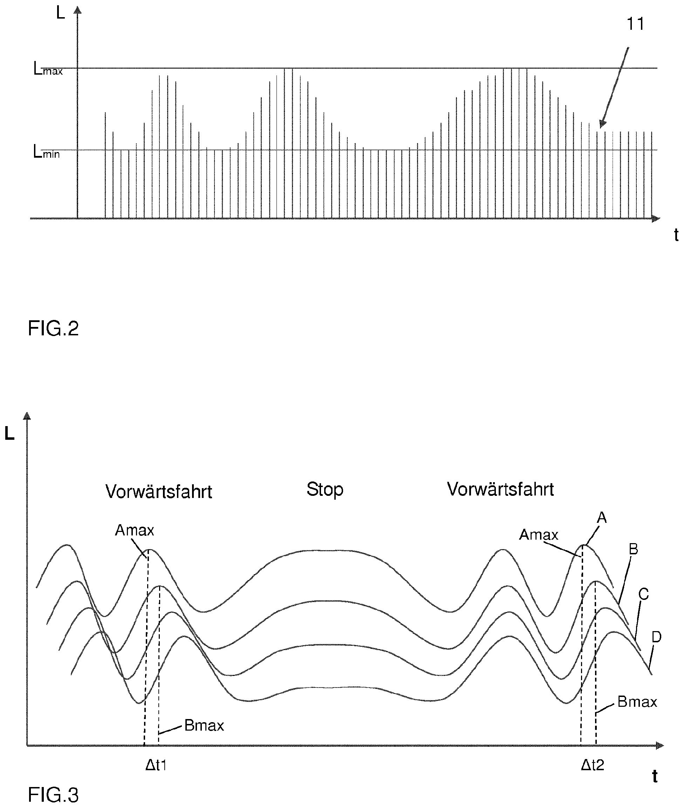

**Fig.2** zeigt ein Diagramm, welches den zeitlichen Verlauf der durch den Raddrehzahlsensor 1 nach **Fig.1** erfassten Induktivität L über der Zeit t darstellt. Wie dort zu erkennen, stellt sich dabei ein periodischer Verlauf der Induktivität L ein, welcher sich annährend sinusförmig zwischen einem Maximalwert Lmax und einem Minimalwert Lmin bewegt, wobei die Maximalwerte Lmax eingenommen werden, wenn ein Zahn 5 des ferromagnetischen Geberelements 2 dem weichmagnetischen Kern 4 gegenüberliegt und die Minimalwerte Lmin, wenn eine Zahnlücke 6 dem weichmagnetischen Kern 4 gegenübersteht.

Durch den Pfeil 11 in **Fig.2** gekennzeichnete Abschnitt oder Bereiche, in welchen sich die Induktivität L nicht ändert und/oder der Gradient des zeitlichen Verlaufs der Induktivität L im Wesentlichen gleich Null ist, identifiziert die elektronische Auswerteschaltung 7 als Stillstand des Rades.

Die elektronische Auswerteschaltung 7 ist weiterhin ausgebildet ist, dass sie das Erfassen der Änderung der Induktivität L der Spule 3 und das Bestimmen der (Dreh-) Geschwindigkeit des Rades basierend auf der geänderten Induktivität L der Spule 3 nur solange vornimmt, bis die bestimmte Geschwindigkeit ausgehend von niedrigeren Geschwindigkeiten beispielsweise ausgehend vom Stillstand einen Geschwindigkeitsgrenzwert erreicht hat. Dieser Geschwindigkeitsgrenzwert kann relativ niedrig sein.

Die Auswerteschaltung 7 ist weiterhin ausgebildet, dass sie wenn die von ihr bestimmte Geschwindigkeit den Geschwindigkeitsgrenzwert ausgehend von niedrigeren Geschwindigkeiten beispielsweise bei einem Beschleunigen des Fahrzeugs überschritten hat, die Änderung der in der Spule 3 induzierten Spannung U erfasst und die Geschwindigkeit dann nicht mehr basierend auf der Änderung der Induktivität L sondern lediglich basierend auf der geänderten Spannung U bestimmt. Wenn dann die durch die Auswerteschaltung 7 bestimmte Geschwindigkeit ausgehend von höheren Geschwindigkeiten den Geschwindigkeitsgrenzwert wieder erreicht oder unterschritten hat, also beispielsweise wenn das in Fahrt befindliche Fahrzeug abgebremst wird, dann wird wiederum eine Änderung der Induktivität L der wenigstens einen Spule 3 erfasst und die Geschwindigkeit dann nicht mehr basierend auf der Änderung der induzierten Spannung U sondern basierend auf der geänderten Induktivität L der Spule 3 bestimmt.

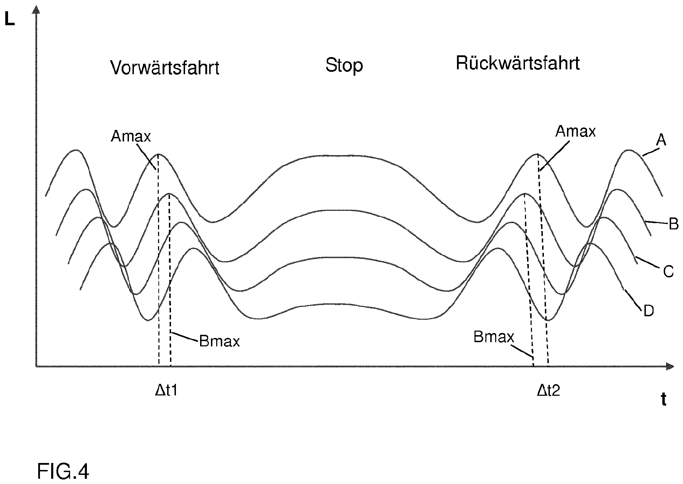

Das Fahrzeug weist beispielsweise vier Räder A, B, C, D (Figuren 3 und 4) mit jeweils einem eigenen induktiven Geschwindigkeitssensor als Raddrehzahlsensor 1 auf. Dann wird ein Vorliegen von Vorwärtsfahrt oder Rückwärtsfahrt des Fahrzeugs auf der Basis von wenigstens einem zeitlichen Phasenversatz zwischen zeitlichen Verläufen der mittels der Raddrehzahlsensoren an beispielsweise zwei Rädern A und B erfassten Induktivitäten L durch die elektronische Auswerteschaltung 7 ermittelt. Mit anderen Worten wird ein Vorliegen von Vorwärtsfahrt oder Rückwärtsfahrt des Fahrzeugs auf der Basis wenigstens eines zeitlichen Phasenversatzes der zeitlichen Verläufe der von den Raddrehzahlsensoren 1 von wenigstens zwei unterschiedlichen Rädern des Fahrzeugs erfassten Induktivitäten L ermittelt.

Diese Vorwärtsfahrt-/Rückwärtsfahrterkennung soll nun anhand der Diagramme von **Fig.3****,** und von **Fig.4** näher erläutert werden, welche jeweils den zeitlichen Verlauf der von vier Raddrehzahlsensoren erfassten Induktivitäten L von vier Rädern A, B, C und D des Fahrzeugs über der Zeit t darstellen. Dabei erfasst für jedes Rad A, B, C und D ein eigener Raddrehzahlsensor 1 die (Dreh-) Geschwindigkeit bzw. die Raddrehzahl. Mit A ist das erste Rad, mit B das zweite Rad, mit C das dritte Rad und mit D das vierte Rad des Fahrzeugs bezeichnet.

Es wird dabei beispielhaft davon ausgegangen, dass die elektronischen Auswerteschaltungen 7 der vier Raddrehzahlsensoren in einer integrierten elektronischen Auswerteschaltung 7 zusammengefasst sind und dass eine Vorwärtsfahrt-, Rückwärtsfahrt- sowie auch eine Stillstanderkennung in der integrierten elektronischen Auswerteschaltung 7 implementiert ist.

Ausgehend von einer durch die Raddrehzahlsensoren 1 erfassten Fahrt des Fahrzeugs, beispielsweise bei einer Vorwärtsfahrt mit einer Geschwindigkeit, welche beispielsweise niedriger als der Geschwindigkeitsgrenzwert ist, wird ein erster zeitlicher Phasenversatz Δt1 zwischen ersten zeitlichen Verläufen der Induktivitäten L beispielsweise der beiden Raddrehzahlsensoren 1 des ersten Rades A und des zweiten Rades B bis zu einem erfassten Stillstand des Fahrzeugs gespeichert. Die ersten zeitlichen Verläufe der Induktivitäten L der Raddrehzahlsensoren 1 aller vier Räder A bis D sind in **Fig.3** links dargestellt. Aus **Fig.3** geht hervor, dass bei der Vorwärtsfahrt die ersten zeitlichen Verläufe der Induktivitäten L der vier Raddrehzahlsensoren der vier Räder A bis D jeweils einen Phasenversatz zueinander aufweisen.

Beispielhaft ist in **Fig.3** der erste zeitliche Phasenversatz Δt1 zwischen dem von dem Raddrehzahlsensor 1 des ersten Rades A und dem von dem Raddrehzahlsensor 1 des zweiten Rades B erfassten Induktivitätsverlauf zwischen den Amplitudenmaxima Amax und Bmax gezeigt. Alternativ könnte dieser der erste zeitliche Phasenversatz Δt1 auch zwischen beliebigen sich entsprechenden Werten der von dem Raddrehzahlsensor 1 des ersten Rades A und dem von dem Raddrehzahlsensor 1 des zweiten Rades B erfassten Induktivitätsverlauf ermittelt werden. Bei Vorwärtsfahrt eilt der Verlauf der Induktivität L an dem ersten Rad A dem Verlauf der Induktivität L an dem zweiten Rad B daher um den zeitlichen ersten Phasenversatz Δt1 vor, wie aus **Fig.3** links hervorgeht.

Es wird nun angenommen, dass das Fahrzeug ausgehend von der Vorwärtsfahrt bis in den Stillstand (Stop) abgebremst wird, was von der integrierten elektronischen Auswerteschaltung 7 beispielsweise dadurch erkannt wird, dass die zeitlichen Verläufe der von den Raddrehzahlsensoren aller vier Räder A bis D erfassten Induktivitäten L jeweils einen Gradienten von Null aufweisen und/oder sich die Induktivitäten L nicht ändern bzw. konstant bleiben, was in **Fig.3** etwa in der Mitte anschaulich dargestellt wird.

Nach einem durch die integrierte elektronische Auswerteschaltung 7 erfassten Wiederanfahren des Fahrzeugs aus dem erfassten Fahrzeugstillstand wird dann ein zweiter zeitlicher Phasenversatz Δt2 zwischen zweiten zeitlichen Verläufen der Induktivitäten L der Raddrehzahlsensoren 1 des ersten Rades A und des zweiten Rades B erfasst. Diese zweiten zeitlichen Verläufe der Induktivitäten L der Raddrehzahlsensoren 1 der beiden Räder A und B sowie der zweite zeitliche Phasenversatz Δt2 sind in **Fig.3** und in **Fig.4** jeweils rechts dargestellt.

Analog zum ersten zeitlichen Phasenversatz Δt1 wird der zweite zeitliche Phasenversatz Δt2 hier beispielsweise ebenfalls zwischen den Amplitudenmaxima Amax und Bmax der zweiten zeitlichen Verläufe der Induktivitäten L der Raddrehzahlsensoren 1 des ersten Rades A und des zweiten Rades B angegeben.

Dann wird der zweite zeitliche Phasenversatz Δt2 mit dem ersten zeitlichen Phasenversatz Δt2 verglichen. Wenn die integrierte elektronische Auswerteschaltung 7 dabei feststellt, dass der zweite zeitliche Phasenversatz Δt2 von dem ersten zeitlichen Phasenversatz Δt1 eine signifikante Abweichung aufweist, so schließt sie auf eine Umkehrung der Fahrtrichtung von Vorwärtsfahrt auf Rückwärtsfahrt.

Als eine signifikante Abweichung des zweiten zeitlichen Phasenversatzes Δt2 von dem ersten zeitlichen Phasenversatz Δt1 wird beispielsweise interpretiert, wenn der zweite zeitliche Phasenversatz Δt2 gegenüber dem ersten zeitlichen Phasenversatz Δt1 invertiert ist. Diese Situation ist in **Fig.4** dargestellt. Bei den in **Fig.4** links dargestellten zeitlichen Verläufen der Induktivitäten L der vier Räder A bis D bei Vorwärtsfahrt eilt wie bei der Vorwärtsfahrt von **Fig.3** links der Verlauf der Induktivität L an dem ersten Rad A dem Verlauf der Induktivität L an dem zweiten Rad B um den ersten zeitlichen Phasenversatz Δt1 vor. Bei der in **Fig.4** rechts dargestellten, nach dem Stillstand des Fahrzeugs beginnenden Weiterfahrt sind die Verhältnisse jedoch umgekehrt, d.h. dass der Verlauf der Induktivität L an dem ersten Rad A dem Verlauf der Induktivität L an dem zweiten Rad B nun nicht mehr um den ersten zeitlichen Phasenversatz Δt1 voreilt sondern im Gegenteil um den zweiten zeitlichen Phasenversatz Δt2 nacheilt. Folglich hat nach dem Zwischenstopp eine Umkehrung der Fahrtrichtung des Fahrzeugs von Vorwärtsfahrt auf Rückwärtsfahrt stattgefunden.

Falls die integrierte elektronische Auswerteschaltung 7 bei dem Vergleich aber andernfalls feststellt, dass eine lediglich nicht signifikante Abweichung des zweiten zeitlichen Phasenversatzes Δt2 von dem ersten zeitlichen Phasenversatz Δt1 vorliegt, so schließt sie auf eine Beibehaltung der Fahrtrichtung Vorwärtsfahrt. Diese Situation ist in **Fig.3** rechts dargestellt. Dort eilt bei der nach dem Stillstand des Fahrzeugs beginnenden Weiterfahrt des Fahrzeugs der Verlauf der Induktivität L an dem ersten Rad A dem Verlauf der Induktivität L an dem zweiten Rad B wie vor dem Zwischenstopp um den zweiten zeitlichen Phasenversatz Δt2 vor, welcher beispielsweise gegenüber dem ersten zeitlichen Phasenversatz Δt1 identisch ist. Folglich liegt hier keine signifikante Abweichung des zweiten zeitlichen Phasenversatzes Δt2 von dem ersten zeitlichen Phasenversatz Δt1 vor.

Das Schließen auf eine Umkehrung der Fahrtrichtung von Vorwärtsfahrt auf Rückwärtsfahrt oder von Rückwärtsfahrt auf Vorwärtsfahrt bzw. das Schließen auf eine Beibehaltung der Fahrtrichtung Vorwärtsfahrt oder Rückwärtsfahrt kann eine Erzeugung eines entsprechenden Signals durch die integrierte elektronische Auswerteschaltung 7 beinhalten, welches dann zur Weiterverarbeitung beispielsweise einem Fahrerassistenzsystem zur Verfügung gestellt wird. Bei einem solchen Fahrerassistenzsystem handelt es sich insbesondere um ein Fahrerassistenzsystem mit einer Autohold-Funktion oder Berganfahrhilfe-Funktion, bei welcher ein Feststellen des Fahrzeugstillstands bzw. ein Anfahren oder Anrollen des Fahrzeugs in einer detektierten Richtung von Bedeutung ist.

### Bezugszeichenliste

- 1: Raddrehzahlsensor
- 2: Geberelement
- 3: Spule
- 4: Kern
- 5: Zähne
- 6: Zahnlücke
- 7: Auswerteschaltung
- 8: Leitungen
- 9: Spalt
- 10: Permanentmagnet
- 11: Pfeil
- A: erstes Rad
- B: zweites Rad
- C: drittes Rad
- D: viertes Rad
- U: induzierte Spannung
- L: Induktivität
- Δt1: erster zeitlicher Phasenversatz
- Δt2: zweiter zeitlicher Phasenversatz

## Patentansprüche

1. Verfahren zum Bestimmen einer Geschwindigkeit und einer Umkehrung der Bewegungsrichtung zwischen einem wenigstens eine Spule (3) umfassenden Messaufnehmer und einem die Induktivität (L) der wenigstens einen Spule (3) verändernden ferromagnetischen Geberelement (2) in einem Fahrzeug mit Hilfe eines wenigstens die Spule (3) und das ferromagnetische Geberelement (2) aufweisenden induktiven Geschwindigkeitssensors (1), bei welchem eine Änderung der Induktivität (L) der wenigstens einen Spule (3) erfasst und die Geschwindigkeit basierend auf der geänderten Induktivität (L) der wenigstens einen Spule (3) bestimmt wird, wobei für wenigstens zwei Räder (A, B) des Fahrzeugs jeweils ein induktiver Geschwindigkeitssensor (1) als Raddrehzahlsensor vorgesehen wird, **dadurch gekennzeichnet, dass** eine Umkehrung der Bewegungsrichtung des ferromagnetischen Geberelements (2) gegenüber der wenigstens einen Spule (3) oder eine Umkehrung der Fahrtrichtung des Fahrzeugs von Vorwärtsfahrt auf Rückwärtsfahrt oder von Rückwärtsfahrt auf Vorwärtsfahrt auf der Basis wenigstens eines zeitlichen Phasenversatzes (Δt1, Δt2) der zeitlichen Verläufe der mittels der Raddrehzahlsensoren (1) der wenigstens zwei Räder (A, B) erfassten Induktivitäten (L) erkannt wird, und dass ein Stillstand des Fahrzeugs dadurch erfasst wird, dass in dem zeitlichen Verlauf der Induktivität (L) ein Abschnitt identifiziert wird, in welchem sich die Induktivität (L) nicht ändert und/oder der Gradient des zeitlichen Verlaufs der Induktivität (L) im Wesentlichen gleich Null ist, und dass als induktiver Geschwindigkeitssensor (1) ein passiver induktiver als Raddrehzahlsensor vorgesehener Geschwindigkeitssensor herangezogen wird, wobei das Erfassen der Induktivität (L) der wenigstens einen Spule (3) dadurch erfolgt, dass
a) die wenigstens eine Spule (3) in einen Parallel- oder Seriell-Schwingkreis verschaltet und die Induktivität (L) der wenigstens einen Spule (3) abhängig von der Resonanzfrequenz des Schwingkreises erfasst wird, oder dass
b) die wenigstens eine Spule (3) mit einem elektrischen Impuls beaufschlagt wird und die Induktivität (L) der wenigstens einen Spule (3) abhängig von Antwort der wenigstens einen Spule (3) auf den elektrischen Impuls erfasst wird, oder dass
c) die wenigstens eine Spule (3) mit einer konstanten Frequenz beaufschlagt und dann die Induktivität (L) der wenigstens einen Spule (3) erfasst wird.

2. Verfahren nach Anspruch 1, **dadurch gekennzeichnet, dass**
a) ausgehend von einer erfassten Fahrt des Fahrzeugs wenigstens ein erster zeitlicher Phasenversatz (Δt1) zwischen ersten zeitlichen Verläufen der von den Raddrehzahlsensoren (1) der wenigstens zwei Räder (A, B) erfassten Induktivitäten (L) bis zu einem erfassten Stillstand des Fahrzeugs gespeichert wird, und dann
b) nach einem erfassten Wiederanfahren des Fahrzeugs wenigstens ein zweiter zeitlicher Phasenversatz (Δt2) zwischen zweiten zeitlichen Verläufen der von den Raddrehzahlsensoren (1) der wenigstens zwei Räder (A, B) erfassten Induktivitäten (L) erfasst und mit dem wenigstens einen ersten zeitlichen Phasenversatz (Δt1) verglichen wird, und wenn dabei festgestellt wird, dass
c) der wenigstens eine zweite zeitliche Phasenversatz (Δt2) von dem wenigstens einen ersten zeitlichen Phasenversatz (Δt1) eine signifikante Abweichung aufweist, auf eine Umkehrung der Fahrtrichtung von Vorwärtsfahrt auf Rückwärtsfahrt oder von Rückwärtsfahrt auf Vorwärtsfahrt geschlossen wird, und falls aber
d) andernfalls festgestellt wird, dass eine lediglich nicht signifikante Abweichung des wenigstens einen zweiten zeitlichen Phasenversatzes (Δt2) von dem wenigstens einen ersten zeitlichen Phasenversatz (Δt1) vorliegt, auf eine Beibehaltung der Fahrtrichtung Vorwärtsfahrt oder Rückwärtsfahrt geschlossen wird.

3. Verfahren nach Anspruch 2, **dadurch gekennzeichnet, dass** als eine signifikante Abweichung des wenigstens einen zweiten zeitlichen Phasenversatzes (Δt2) von dem wenigstens einen ersten zeitlichen Phasenversatz (Δt1) interpretiert wird, wenn der wenigstens eine zweite zeitliche Phasenversatz (Δt2) gegenüber dem wenigstens einen ersten zeitlichen Phasenversatz (Δt1) invertiert ist, wobei sich ein zeitlicher Vorlauf des ersten Verlaufs der von dem Raddrehzahlsensor (1) eines ersten Rads (A) der wenigstens zwei Räder (A, B) erfassten Induktivität (L) gegenüber dem ersten Verlauf der von dem Raddrehzahlsensor (1) eines zweiten Rads (B) der wenigstens zwei Räder (A, B) erfassten Induktivität (L) um den ersten zeitlichen Phasenversatz (Δt1) in einen zeitlichen Nachlauf des zweiten Verlaufs der von dem Raddrehzahlsensor (1) des ersten Rads (A) der wenigstens zwei Räder (A, B) erfassten Induktivität (L) gegenüber dem zweiten Verlauf der von dem Raddrehzahlsensor (1) des zweiten Rads (B) der wenigstens zwei Räder (A, B) erfassten Induktivität (L) um den zweiten zeitlichen Phasenversatz (Δt2) ändert.

4. Verfahren nach Anspruch 2 oder 3, **dadurch gekennzeichnet, dass** als eine nicht signifikante Abweichung des wenigstens einen zweiten zeitlichen Phasenversatzes (Δt2) von dem wenigstens einen ersten zeitlichen Phasenversatz (Δt1) interpretiert wird, wenn der wenigstens eine zweite zeitliche Phasenversatz (Δt2) gegenüber dem wenigstens einen ersten zeitlichen Phasenversatz (Δt1) nicht invertiert ist, wobei der erste Verlauf der von dem Raddrehzahlsensor (1) eines ersten Rads (A) der wenigstens zwei Räder (A, B) erfassten Induktivität (L) gegenüber dem ersten Verlauf der von dem Raddrehzahlsensor (1) eines zweiten Rads (B) der wenigstens zwei Räder (A, B) erfassten Induktivität (L) um den ersten zeitlichen Phasenversatz (Δt1) zeitlich vorläuft und auch der zweite Verlauf der von dem Raddrehzahlsensor (1) des ersten Rads (A) der wenigstens zwei Räder (A, B) erfassten Induktivität (L) gegenüber dem zweiten Verlauf der von dem Raddrehzahlsensor (1) des zweiten Rads (B) der wenigstens zwei Räder (A, B) erfassten Induktivität (L) um den zweiten zeitlichen Phasenversatz (Δt2) zeitlich vorläuft.

5. Geschwindigkeitsmessvorrichtung zum Bestimmen einer Geschwindigkeit und einer Umkehrung der Bewegungsrichtung zwischen einem wenigstens eine Spule (3) umfassenden Messaufnehmer und einem die Induktivität (L) der wenigstens einen Spule (3) verändernden ferromagnetischen Geberelement (2) in einem Fahrzeug, welche wenigstens einen induktiven Geschwindigkeitssensor (1) aufweist, der mindestens Folgendes umfasst:
a) die wenigstens eine Spule (3),
b) das ferromagnetische Geberelement (2),
c) eine Auswerteschaltung (7), wobei
d) die Auswerteschaltung (7) ausgebildet ist, dass sie eine Änderung der Induktivität (L) der wenigstens einen Spule (3) erfasst und die Geschwindigkeit basierend auf der geänderten Induktivität (L) der wenigstens einen Spule (3) bestimmt, wobei
e) für wenigstens zwei Räder (A, B) des Fahrzeugs jeweils ein induktiver Geschwindigkeitssensor (1) als Raddrehzahlsensor vorgesehen ist, **dadurch gekennzeichnet, dass**
f) die Auswerteschaltung (7) ausgebildet ist, dass sie eine Umkehrung der Bewegungsrichtung des ferromagnetischen Geberelements (2) gegenüber der wenigstens einen Spule (3) oder eine Umkehrung der Fahrtrichtung des Fahrzeugs von Vorwärtsfahrt auf Rückwärtsfahrt oder von Rückwärtsfahrt auf Vorwärtsfahrt auf der Basis wenigstens eines zeitlichen Phasenversatzes (Δt1, Δt2) zwischen den zeitlichen Verläufen der mittels der Raddrehzahlsensoren (1) der wenigstens zwei Räder (A, B) erfassten Induktivitäten (L) erkennt, und dass
g) die Auswerteschaltung (7) ausgebildet ist, dass sie einen Stillstand des Fahrzeugs dadurch erfasst, dass sie in dem zeitlichen Verlauf der Induktivität (L) einen Abschnitt identifiziert, in welchem sich die Induktivität (L) nicht ändert und/oder in welchem der Gradient des Verlaufs der Induktivität (L) im Wesentlichen gleich Null ist, wobei der induktive Geschwindigkeitssensor (1) ein passiver induktiver Geschwindigkeitssensor ist, wobei
h) die wenigstens eine Spule (3) in einen Parallel- oder Seriell-Schwingkreis verschaltet ist und die Auswerteschaltung (7) ausgebildet ist, dass sie die Induktivität (L) der wenigstens einen Spule (3) abhängig von der Resonanzfrequenz des Schwingkreises erfasst, oder dass
i) Mittel zum Beaufschlagen der wenigstens einen Spule (3) mit einem elektrischen Impuls vorgesehen sind, welche die wenigstens eine Spule (3) mit einem elektrischen Impuls beaufschlagen, wobei die Auswerteschaltung (7) ausgebildet ist, dass sie die Induktivität (L) der wenigstens einen Spule (3) abhängig von der Antwort der wenigstens einen Spule (3) auf den elektrischen Impuls erfasst, oder dass
j) Mittel zum Beaufschlagen der wenigstens einen Spule (3) mit einer konstanten Frequenz vorgesehen sind, welche die wenigstens eine Spule (3) mit einer konstanten Frequenz beaufschlagen und die Auswerteschaltung (7) ausgebildet ist, dass sie dann die Induktivität (L) der wenigstens einen Spule (3) erfasst.

6. Geschwindigkeitsmessvorrichtung nach Anspruch 5, **dadurch gekennzeichnet, dass** die Auswerteschaltung (7) ausgebildet ist, dass sie
a) ausgehend von einer erfassten Fahrt des Fahrzeugs wenigstens einen ersten zeitlichen Phasenversatz (Δt1) zwischen ersten zeitlichen Verläufen der von den Raddrehzahlsensoren (1) der wenigstens zwei Räder (A, B) erfassten Induktivitäten (L) bis zu einem erfassten Stillstand des Fahrzeugs speichert, und dann
b) nach einem erfassten Wiederanfahren des Fahrzeugs wenigstens einen zweiten zeitlichen Phasenversatz (Δt2) zwischen zweiten zeitlichen Verläufen der von den Raddrehzahlsensoren (1) der wenigstens zwei Räder (A, B) erfassten Induktivitäten (L) erfasst und mit dem wenigstens einen ersten zeitlichen Phasenversatz (Δt1) vergleicht, und wenn sie dabei feststellt, dass
c) der wenigstens eine zweite zeitliche Phasenversatz (Δt2) von dem wenigstens einen ersten zeitlichen Phasenversatz (Δt1) eine signifikante Abweichung aufweist, auf eine Umkehrung der Fahrtrichtung von Vorwärtsfahrt auf Rückwärtsfahrt oder von Rückwärtsfahrt auf Vorwärtsfahrt schließt, und falls sie aber
d) andernfalls feststellt, dass eine lediglich nicht signifikante Abweichung des wenigstens einen zweiten zeitlichen Phasenversatzes (Δt2) von dem wenigstens einen ersten zeitlichen Phasenversatz (Δt1) vorliegt, auf eine Beibehaltung der Fahrtrichtung Vorwärtsfahrt oder Rückwärtsfahrt schließt.

7. Geschwindigkeitsmessvorrichtung nach Anspruch 6, **dadurch gekennzeichnet, dass** die Auswerteschaltung (7) ausgebildet ist, dass sie als eine signifikante Abweichung des wenigstens einen zweiten zeitlichen Phasenversatzes (Δt2) von dem wenigstens einen ersten zeitlichen Phasenversatz (Δt1) interpretiert, wenn sie feststellt, dass der wenigstens eine zweite zeitliche Phasenversatz (Δt2) gegenüber dem wenigstens einen ersten zeitlichen Phasenversatz (Δt1) invertiert ist, wobei sich ein zeitlicher Vorlauf des ersten Verlaufs der von dem Raddrehzahlsensor (1) eines ersten Rads (A) der wenigstens zwei Räder (A, B) erfassten Induktivität (L) gegenüber dem ersten Verlauf der von dem Raddrehzahlsensor (1) eines zweiten Rads (B) der wenigstens zwei Räder (A, B) erfassten Induktivität (L) um den ersten zeitlichen Phasenversatz (Δt1) in einen zeitlichen Nachlauf des zweiten Verlaufs der von dem Raddrehzahlsensor (1) des ersten Rads (A) der wenigstens zwei Räder (A, B) erfassten Induktivität (L) gegenüber dem zweiten Verlauf der von dem Raddrehzahlsensor (1) des zweiten Rads (B) der wenigstens zwei Räder (A, B) erfassten Induktivität (L) um den zweiten zeitlichen Phasenversatz (Δt2) ändert.

8. Geschwindigkeitsmessvorrichtung nach Anspruch 6 oder 7, **dadurch gekennzeichnet, dass** die Auswerteschaltung (7) ausgebildet ist, dass sie als eine nicht signifikante Abweichung des wenigstens einen zweiten zeitlichen Phasenversatzes (Δt2) von dem wenigstens einen ersten zeitlichen Phasenversatz (Δt1) interpretiert, wenn der wenigstens eine zweite zeitliche Phasenversatz (Δt2) gegenüber dem wenigstens einen ersten zeitlichen Phasenversatz (Δt1) nicht invertiert ist, wobei der erste Verlauf der von dem Raddrehzahlsensor (1) eines ersten Rads (A) der wenigstens zwei Räder (A, B) erfassten Induktivität (L) gegenüber dem ersten Verlauf der von dem Raddrehzahlsensor (1) eines zweiten Rads (B) der wenigstens zwei Räder (A, B) erfassten Induktivität (L) um den ersten zeitlichen Phasenversatz (Δt1) zeitlich vorläuft und auch der zweite Verlauf der von dem Raddrehzahlsensor (1) des ersten Rads (A) der wenigstens zwei Räder (A, B) erfassten Induktivität (L) gegenüber dem zweiten Verlauf der von dem Raddrehzahlsensor (1) des zweiten Rads (B) der wenigstens zwei Räder (A, B) erfassten Induktivität (L) um den zweiten zeitlichen Phasenversatz (Δt2) zeitlich vorläuft.

9. Geschwindigkeitsmessvorrichtung nach einem der Ansprüche 5 bis 8, **dadurch gekennzeichnet, dass** das ferromagnetische Geberelement (2) abwechselnd vorspringende Zähne (5) und Zahnlücken (6) aufweist.

10. Geschwindigkeitsmessvorrichtung nach einem der Ansprüche 5 bis 9, **dadurch gekennzeichnet, dass** die wenigstens eine Spule (3) einen weichmagnetischen Kern (4) umgibt.

11. Geschwindigkeitsmessvorrichtung nach Anspruch 10, **dadurch gekennzeichnet, dass** der weichmagnetische Kern (4) an einem vom ferromagnetischen Geberelement (2) wegweisenden Ende einen Permanentmagneten (10) aufweist.

12. Fahrerassistenzsystem mit wenigstens einer Geschwindigkeitsmessvorrichtung nach einem der Ansprüche 5 bis 11.

13. Fahrerassistenzsystem nach Anspruch 12, **dadurch gekennzeichnet, dass** es eine Autohold-Funktion und/oder eine Berganfahrhilfe-Funktion beinhaltet.

14. Fahrzeug mit einem Fahrerassistenzsystem nach einem der Ansprüche 12 oder 13.

## Claims

1. Method for determining a speed and a reversal of the direction of movement between a sensor comprising at least one coil (3) and a ferromagnetic sensor element (2) changing the inductance (L) of the at least one coil (3) in a vehicle with the aid of an inductive speed sensor (1) comprising at least the coil (3) and the ferromagnetic sensor element (2), in which a change in the inductance (L) of the at least one coil (3) is detected and the speed is determined based on the changed inductance (L) of the at least one coil (3), wherein an inductive speed sensor (1) is provided as a wheel speed sensor for at least two wheels (A, B) of the vehicle, **characterized in that** a reversal of the direction of movement of the ferromagnetic sensor element (2) relative to the at least one coil (3) or a reversal of the direction of travel of the vehicle from forwards travel to reverse travel or from reverse travel to forwards travel is detected on the basis of at least one temporal phase offset (Δt1, Δt2) of the temporal curves of the inductances (L) detected by means of the wheel speed sensors (1) of the at least two wheels (A, B), and **in that** a standstill of the vehicle is detected **in that** a section is identified in the temporal curve of the inductance (L) in which the inductance (L) does not change and/or the gradient of the temporal curve of the inductance (L) is essentially equal to zero and **in that** a passive inductive speed sensor provided as a wheel speed sensor is used as the inductive speed sensor (1), wherein the inductance (L) of the at least one coil (3) is detected **in that**
a) the at least one coil (3) is connected in a parallel or series resonant circuit and the inductance (L) of the at least one coil (3) is detected as a function of the resonant frequency of the resonant circuit, or **in that**
b) an electrical pulse is applied to the at least one coil (3) and the inductance (L) of the at least one coil (3) is detected as a function of the response of the at least one coil (3) to the electrical pulse, or **in that**
c) a constant frequency is applied to the at least one coil (3) and then the inductance (L) of the at least one coil (3) is detected.

2. Method according to claim 1, **characterized in that**
a) based on a detected movement of the vehicle at least a first temporal phase offset (Δt1) between first temporal curves of the inductances (L) detected by the wheel speed sensors (1) of the at least two wheels (A, B) up to a detected standstill of the vehicle is stored, and then
b) after a detected restart of the vehicle, at least one second temporal phase offset (Δt2) between second temporal curves of the inductances (L) detected by the wheel speed sensors (1) of the at least two wheels (A, B) is detected and compared with the at least one first temporal phase offset (Δt1), and if it is determined thereby that
c) the at least one second temporal phase offset (Δt2) has a significant deviation from the at least one first temporal phase offset (Δt1), a reversal of the direction of travel from forwards travel to reverse travel or from reverse travel to forwards travel is deduced, and if however
d) otherwise it is determined that there is only a non-significant deviation of the at least one second temporal phase offset (Δt2) from the at least one first temporal phase offset (Δt1), it is concluded that the direction of travel forwards travel or reverse travel is maintained.

3. Method according to claim 2, **characterized in that** a significant deviation of the at least one second temporal phase offset (Δt2) from the at least one first temporal phase offset (Δt1) is interpreted when the at least one second temporal phase offset (Δt2) is inverted with respect to the at least one first temporal phase offset (Δt1), wherein a temporal lead of the first curve of the inductance (L) detected by the wheel speed sensor (1) of a first wheel (A) of the at least two wheels (A, B) changes relative to the first curve of the inductance (L) detected by the wheel speed sensor (1) of a second wheel (B) of the at least two wheels (A, B) by the first temporal phase offset (Δt1) into a temporal lag of the second curve of the inductance (L) detected by the wheel speed sensor (1) of the first wheel (A) of the at least two wheels (A, B) with respect to the second curve of the inductance (L) detected by the wheel speed sensor (1) of the second wheel (B) of the at least two wheels (A, B) by the second temporal phase offset (Δt2).

4. Method according to claim 2 or 3, **characterized in that** a non-significant deviation of the at least one second temporal phase offset (Δt2) from the at least one first temporal phase offset (Δt1) is interpreted when the at least one second temporal phase offset (Δt2) is not inverted with respect to the at least one first temporal phase offset (Δt1), wherein the first curve of the inductance (L) detected by the wheel speed sensor (1) of a first wheel (A) of the at least two wheels (A, B) temporally leads the first curve of the inductance (L) detected by the wheel speed sensor (1) of a second wheel (B) of the at least two wheels (A, B) by the first temporal phase offset (Δt1) and also the second curve of the inductance (L) detected by the wheel speed sensor (1) of the first wheel (A) of the at least two wheels (A, B) temporally leads the second curve of the inductance (L) detected by the wheel speed sensor (1) of the second wheel (B) of the at least two wheels (A, B) by the second temporal phase offset (Δt2).

5. Speed measurement device for determining a speed and a reversal of the direction of movement between a measuring sensor comprising at least one coil (3) and a ferromagnetic sensor element (2) in a vehicle which changes the inductance (L) of the at least one coil (3), which has at least one inductive speed sensor (1) which comprises at least the following:
a) the at least one coil (3),
b) the ferromagnetic sensor element (2),
c) an evaluation circuit (7), wherein
d) the evaluation circuit (7) is configured such that it detects a change in the inductance (L) of the at least one coil (3) and determines the speed based on the changed inductance (L) of the at least one coil (3), wherein
e) for at least two wheels (A, B) of the vehicle an inductive speed sensor (1) is provided as a wheel speed sensor, **characterized in that**
f) the evaluation circuit (7) is configured such that it determines a reversal of the direction of movement of the ferromagnetic sensor element (2) with respect to the at least one coil (3) or a reversal of the direction of travel of the vehicle from forwards travel to reverse travel or from reverse travel to forwards travel on the basis of at least one temporal phase offset (Δt1, Δt2) between the temporal curves of the inductances (L) detected by the wheel speed sensors (1) of the at least two wheels (A, B), and **in that**
g) the evaluation circuit (7) is configured to detect a standstill of the vehicle **in that** it identifies a section in the temporal curve of the inductance (L), in which the inductance (L) does not change and/or in which the gradient of the curve of the inductance (L) is essentially equal to zero, wherein the inductive speed sensor (1) is a passive inductive speed sensor, wherein
h) the at least one coil (3) is connected in a parallel or series resonant circuit and the evaluation circuit (7) is configured to detect the inductance (L) of the at least one coil (3) as a function of the resonant frequency of the resonant circuit, or **in that**
i) means are provided for applying an electrical pulse to the at least one coil (3) which apply an electrical pulse to the at least one coil (3), wherein the evaluation circuit (7) is configured to detect the inductance (L) of the at least one coil (3) as a function of the response of the at least one coil (3) to the electrical pulse, or **in that**
j) means are provided for applying a constant frequency to the at least one coil (3) which apply a constant frequency to the at least one coil (3) and the evaluation circuit (7) is configured such that it then detects the inductance (L) of the at least one coil (3).

6. Speed measurement device according to claim 5, **characterized in that** the evaluation circuit (7) is configured such that
a) starting from a detected movement of the vehicle, it stores at least a first temporal phase offset (Δt1) between first temporal curves of the inductances (L) detected by the wheel speed sensors (1) of the at least two wheels (A, B) up to a detected standstill of the vehicle, and then
b) after a detected restart of the vehicle, it detects at least one second temporal phase offset (Δt2) between second temporal curves of the inductances (L) detected by the wheel speed sensors (1) of the at least two wheels (A, B) and compares them with the at least one first temporal phase offset (Δt1), and if it determines thereby that
c) the at least one second temporal phase offset (Δt2) has a significant deviation from the at least one first temporal phase offset (Δt1), it concludes that the direction of travel has been reversed from forwards travel to reverse travel or from reverse travel to forwards travel, and if however
d) otherwise it determines that there is only a non-significant deviation of the at least one second temporal phase offset (Δt2) from the at least one first temporal phase offset (Δt1), it concludes that the direction of travel forwards travel or reverse travel is maintained.

7. Speed measurement device according to claim 6, **characterized in that** the evaluation circuit (7) is configured to interpret a significant deviation of the at least one second temporal phase offset (Δt2) from the at least one first temporal phase offset (Δt1) if it establishes that the at least one second temporal phase offset (Δt2) is inverted with respect to the at least one first temporal phase offset (Δt1), wherein a temporal lead of the first curve of the inductance (L) detected by the wheel speed sensor (1) of a first wheel (A) of the at least two wheels (A, B) with respect to the first curve of the inductance (L) detected by the wheel speed sensor (1) of a second wheel (B) of the at least two wheels (A, B) by the first temporal phase offset (Δt1) changes into a temporal lag of the second curve of the inductance (L) detected by the wheel speed sensor (1) of the first wheel (A) of the at least two wheels (A, B) with respect to the second curve of the inductance (L) detected by the wheel speed sensor (1) of the second wheel (B) of the at least two wheels (A, B) by the second temporal phase offset (Δt2).

8. Speed measurement device according to claim 6 or 7, **characterized in that** the evaluation circuit (7) is configured to interpret a non-significant deviation of the at least one second phase offset (Δt2) from the at least one first temporal phase offset (Δt1), if the at least one second temporal phase offset (Δt2) is not inverted with respect to the at least one first temporal phase offset (Δt1), wherein the first curve of the inductance (L) detected by the wheel speed sensor (1) of a first wheel (A) of the at least two wheels (A, B) leads the first curve of the inductance (L) detected by the wheel speed sensor (1) of a second wheel (B) of the at least two wheels (A, B) by the first temporal phase offset (Δt1) and the second curve of the inductance (L) detected by the wheel speed sensor (1) of the first wheel (A) of the at least two wheels (A, B) also leads the second curve of the inductance (L) detected by the wheel speed sensor (1) of the second wheel (B) of the at least two wheels (A, B) by the second temporal phase offset (Δt2).

9. Speed measurement device according to any one of claims 5 to 8, **characterized in that** the ferromagnetic sensor element (2) has alternately projecting teeth (5) and tooth gaps (6).

10. Speed measurement device according to any one of claims 5 to 9, **characterized in that** the at least one coil (3) surrounds a soft magnetic core (4).

11. Speed measurement device according to claim 10, **characterized in that** the soft-magnetic core (4) has a permanent magnet (10) at an end pointing away from the ferromagnetic sensor element (2).

12. Driver assistance system with at least one speed measurement device according to any one of claims 5 to 11.

13. Driver assistance system according to claim 12, **characterized in that** it includes an autohold function and/or a hill start-assist function.

14. Vehicle with a driver assistance system according to any one of claims 12 or 13.

## Revendications

1. Procédé pour déterminer une vitesse et une inversion de la direction de mouvement entre un capteur de mesure comprenant au moins une bobine (3) et un élément transmetteur ferromagnétique (2) modifiant l'inductance (L) de l'au moins une bobine (3) dans un véhicule à l'aide d'un capteur de vitesse inductif (1) présentant au moins la bobine (3) et l'élément transmetteur ferromagnétique (2), dans lequel une modification de l'inductance (L) de l'au moins une bobine (3) est détectée et la vitesse est déterminée sur la base de l'inductance modifiée (L) de l'au moins une bobine (3), dans lequel un capteur de vitesse inductif (1) est prévu en tant que capteur de vitesse de roue pour au moins deux roues (A, B) du véhicule, **caractérisé en ce qu'**une inversion de la direction de mouvement de l'élément transmetteur ferromagnétique (2) par rapport à l'au moins une bobine (3) ou une inversion du sens de la marche du véhicule de la marche avant à la marche arrière ou de la marche arrière à la marche avant est détectée sur la base d'au moins un déphasage temporel (Δt1, Δt2) des tracés temporels des inductances (L) détectées au moyen des capteurs de vitesse de roue (1) des au moins deux roues (A, B), et **en ce qu'**un arrêt du véhicule est ainsi détecté, **en ce que**, dans le tracé temporel de l'inductance (L), une section est identifiée, dans laquelle l'inductance (L) ne change pas et/ou le gradient du tracé temporel de l'inductance (L) est sensiblement égal à zéro, et **en ce qu'**un capteur de vitesse inductif passif prévu comme capteur de vitesse de roue est utilisé en tant que capteur de vitesse inductif (1), dans lequel la détection de l'inductance (L) de l'au moins une bobine (3) s'effectue **en ce que**
a) l'au moins une bobine (3) est connectée dans un circuit résonnant parallèle ou en série et l'inductance (L) de l'au moins une bobine (3) est détectée en fonction de la fréquence de résonance du circuit résonnant, ou **en ce que**
b) l'au moins une bobine (3) est soumise à une impulsion électrique et l'inductance (L) de l'au moins une bobine (3) est détectée en fonction de la réponse de l'au moins une bobine (3) à l'impulsion électrique, ou **en ce que**
c) l'au moins une bobine (3) est soumise à une fréquence constante et l'inductance (L) de l'au moins une bobine (3) est alors détectée.

2. Procédé selon la revendication 1, **caractérisé en ce que**
a) sur la base d'une marche détectée du véhicule, au moins un premier déphasage temporel (Δt1) entre de premiers tracés temporels des inductances (L) détectées par les capteurs de vitesse de roue (1) des au moins deux roues (A, B) est enregistré jusqu'à l'arrêt détecté du véhicule, puis
b) après un redémarrage détecté du véhicule, au moins un second déphasage temporel (Δt2) entre des seconds tracés temporels des inductances (L) détectées par les capteurs de vitesse de roue (1) des au moins deux roues (A, B) est détecté et comparé à l'au moins un premier déphasage temporel (Δt1), et s'il est alors constaté que
c) l'au moins un second déphasage temporel (Δt2) présente un écart significatif par rapport à l'au moins un premier déphasage temporel (Δt1), une inversion du sens de la marche de la marche avant à la marche arrière ou de la marche arrière à la marche avant est conclue, et si
d) dans le cas contraire, il est constaté qu'il n'y a qu'un écart non significatif de l'au moins un second déphasage temporel (Δt2) par rapport à l'au moins un premier déphasage temporel (Δt1), il est conclu que le sens de la marche est maintenu comme marche avant ou marche arrière.

3. Procédé selon la revendication 2, **caractérisé en ce qu'**un écart significatif de l'au moins un second déphasage temporel (Δt2) par rapport à l'au moins un premier déphasage temporel (Δt1) est interprété lorsque l'au moins un second déphasage temporel (Δt2) par rapport à l'au moins un premier déphasage temporel (Δt1) est inversé, dans lequel une avancée temporelle du premier tracé temporel de l'inductance (L) détectée par le capteur de vitesse de roue (1) d'une première roue (A) des au moins deux roues (A, B) change par rapport au premier tracé temporel de l'inductance (L) détectée par le capteur de vitesse de roue (1) d'une seconde roue (B) des au moins deux roues (A, B) du premier déphasage temporel (Δt1) en un retard temporel du second tracé temporel de l'inductance (L) détectée par le capteur de vitesse de roue (1) de la première roue (A) des au moins deux roues (A, B) par rapport au second tracé temporel de l'inductance (L) détectée par le capteur de vitesse de roue (1) de la seconde roue (B) des au moins deux roues (A, B) du second déphasage temporel (Δt2).

4. Procédé selon la revendication 2 ou 3, **caractérisé en ce qu'**un écart non significatif de l'au moins un second déphasage temporel (Δt2) par rapport à l'au moins un premier déphasage temporel (Δt1) est interprété lorsque l'au moins un second déphasage temporel (Δt2) par rapport à l'au moins un premier déphasage temporel (Δt1) n'est pas inversé, dans lequel le premier tracé temporel de l'inductance (L) détectée par le capteur de vitesse de roue (1) d'une première roue (A) des au moins deux roues (A, B) avance temporellement par rapport au premier tracé temporel de l'inductance (L) détectée par le capteur de vitesse de roue (1) d'une seconde roue (B) des au moins deux roues (A, B) du premier déphasage temporel (Δt1) et le second tracé de l'inductance (L) détectée par le capteur de vitesse de roue (1) de la première roue (A) des au moins deux roues (A, B) avance aussi temporellement par rapport au second tracé temporel de l'inductance (L) détectée par le capteur de vitesse de roue (1) de la seconde roue (B) des au moins deux roues (A, B) du second déphasage temporel (Δt2).

5. Dispositif de mesure de vitesse pour déterminer une vitesse et une inversion de la direction de mouvement entre un capteur de mesure comprenant au moins une bobine (3) et un élément transmetteur ferromagnétique (2) modifiant l'inductance (L) de l'au moins une bobine (3) dans un véhicule, laquelle présente au moins un capteur de vitesse inductif (1) qui comprend au moins ce qui suit :
a) l'au moins une bobine (3),
b) l'élément transmetteur ferromagnétique (2),
c) un circuit d'évaluation (7), dans lequel
d) le circuit d'évaluation (7) est conçu de sorte qu'il détecte une modification de l'inductance (L) de l'au moins une bobine (3) et détermine la vitesse sur la base de l'inductance modifiée (L) de l'au moins une bobine (3), dans lequel
e) respectivement un capteur de vitesse inductif (1) est prévu en tant que capteur de vitesse de roue pour au moins deux roues (A, B) du véhicule, **caractérisé en ce que**
f) le circuit d'évaluation (7) est conçu pour inverser la direction de mouvement de l'élément transmetteur ferromagnétique (2) par rapport à l'au moins une bobine (3) ou pour inverser la direction de mouvement du véhicule de la marche avant à la marche arrière ou de la marche arrière à la marche avant sur la base d'au moins un déphasage temporel (Δt1, Δt2) entre les tracés temporels des inductances (L) détectées au moyen des capteurs de vitesse de roue (1) des au moins deux roues (A, B), et **en ce que**
g) le circuit d'évaluation (7) est conçu pour détecter un arrêt du véhicule en identifiant, dans le tracé temporel de l'inductance (L), une section dans laquelle l'inductance (L) ne change pas et/ou dans laquelle le gradient du tracé de l'inductance (L) est sensiblement égal à zéro, dans laquelle le capteur de vitesse inductif (1) est un capteur de vitesse inductif passif, dans lequel
h) l'au moins une bobine (3) est connectée dans un circuit résonnant parallèle ou en série et le circuit d'évaluation (7) est conçu de sorte que l'inductance (L) de l'au moins une bobine (3) est détectée en fonction de la fréquence de résonance du circuit résonnant, ou **en ce que**
i) des moyens pour solliciter l'au moins une bobine (3) avec une impulsion électrique sont prévus, lesquels sollicitent l'au moins une bobine (3) avec une impulsion électrique, dans lequel le circuit d'évaluation (7) est conçu pour détecter l'inductance (L) de l'au moins une bobine (3) en fonction de la réponse de l'au moins une bobine (3) à l'impulsion électrique, ou **en ce que**
j) des moyens sont prévus pour solliciter l'au moins une bobine (3) avec une fréquence constante, lesquels sollicitent l'au moins une bobine (3) avec une fréquence constante et le circuit d'évaluation (7) est conçu de sorte qu'il détecte alors l'inductance (L) de l'au moins une bobine (3).

6. Dispositif de mesure de vitesse selon la revendication 5, **caractérisé en ce que** le circuit d'évaluation (7) est conçu de sorte qu'il
a) sur la base d'une marche détectée du véhicule, enregistre au moins un premier déphasage temporel (Δt1) entre de premiers tracés temporels des inductances (L) détectées par les capteurs de vitesse de roue (1) des au moins deux roues (A, B) jusqu'à l'arrêt détecté du véhicule, puis
b) après un redémarrage détecté du véhicule, détecte au moins un second déphasage temporel (Δt2) entre des seconds tracés temporels des inductances (L) détectées par les capteurs de vitesse de roue (1) des au moins deux roues (A, B) et le compare à l'au moins un premier déphasage temporel (Δt1), et s'il constate alors que
c) l'au moins un second déphasage temporel (Δt2) présente un écart significatif par rapport à l'au moins un premier déphasage temporel (Δt1), conclut une inversion du sens de la marche de la marche avant à la marche arrière ou de la marche arrière à la marche avant, et s'il
d) dans le cas contraire, constate qu'il n'y a qu'un écart non significatif de l'au moins un second déphasage temporel (Δt2) par rapport à l'au moins un premier déphasage temporel (Δt1), il conclut que le sens de la marche est maintenu comme marche avant ou marche arrière.

7. Dispositif de mesure de vitesse selon la revendication 6, **caractérisé en ce que** le circuit d'évaluation (7) est conçu pour interpréter un écart significatif de l'au moins un second déphasage temporel (Δt2) par rapport à l'au moins un premier déphasage temporel (Δt1) lorsqu'il constate que l'au moins un second déphasage temporel (Δt2) par rapport à l'au moins un premier déphasage temporel (Δt1) est inversé, dans lequel une avancée temporelle du premier tracé temporel de l'inductance (L) détectée par le capteur de vitesse de roue (1) d'une première roue (A) des au moins deux roues (A, B) change par rapport au premier tracé temporel de l'inductance (L) détectée par le capteur de vitesse de roue (1) d'une seconde roue (B) des au moins deux roues (A, B) du premier déphasage temporel (Δt1) en un retard temporel du second tracé temporel de l'inductance (L) détectée par le capteur de vitesse de roue (1) de la première roue (A) des au moins deux roues (A, B) par rapport au second tracé temporel de l'inductance (L) détectée par le capteur de vitesse de roue (1) de la seconde roue (B) des au moins deux roues (A, B) du second déphasage temporel (Δt2).

8. Dispositif de mesure de vitesse selon la revendication 6 ou 7, **caractérisé en ce que** le circuit d'évaluation (7) est conçu pour interpréter un écart non significatif de l'au moins un second déphasage temporel (Δt2) par rapport à l'au moins un premier déphasage temporel (Δt1) lorsque l'au moins un second déphasage temporel (Δt2) par rapport à l'au moins un premier déphasage temporel (Δt1) n'est pas inversé, dans lequel le premier tracé temporel de l'inductance (L) détectée par le capteur de vitesse de roue (1) d'une première roue (A) des au moins deux roues (A, B) avance temporellement par rapport au premier tracé temporel de l'inductance (L) détectée par le capteur de vitesse de roue (1) d'une seconde roue (B) des au moins deux roues (A, B) du premier déphasage temporel (Δt1) et le second tracé de l'inductance (L) détectée par le capteur de vitesse de roue (1) de la première roue (A) des au moins deux roues (A, B) avance aussi temporellement par rapport au second tracé temporel de l'inductance (L) détectée par le capteur de vitesse de roue (1) de la seconde roue (B) des au moins deux roues (A, B) du second déphasage temporel (Δt2).

9. Dispositif de mesure de vitesse selon l'une quelconque des revendications 5 à 8, **caractérisé en ce que** l'élément transmetteur ferromagnétique (2) présente à tour de rôle des dents (5) en saillie et des entredents (6).

10. Dispositif de mesure de vitesse selon l'une quelconque des revendications 5 à 9, **caractérisé en ce que** l'au moins une bobine (3) entoure un noyau magnétique doux (4).

11. Dispositif de mesure de vitesse selon la revendication 10, **caractérisé en ce que** le noyau magnétique doux (4) présente un aimant permanent (10) à une extrémité opposée à l'élément transmetteur ferromagnétique (2).

12. Système d'assistance au conducteur avec au moins un dispositif de mesure de vitesse selon l'une quelconque des revendications 5 à 11.

13. Système d'assistance au conducteur selon la revendication 12, **caractérisé en ce qu'**il contient une fonction Autohold et/ou une fonction d'aide au démarrage en côte.

14. Véhicule avec un système d'assistance au conducteur selon l'une quelconque des revendications 12 ou 13.
